# EUROPEAN PATENT APPLICATION

(11) **EP 4 270 094 A1**
(43) Date of publication of application: **01.11.2023**
(21) Application number: 21909873.8
(22) Date of filing: 04.10.2021
(51) Int. Cl.: G02C 7/00, G02B 1/04, C08G 75/08

(54) **COMPOSITION, AND OPTICAL MATERIAL AND LENS USING SAME**

(30) Priority: 25.12.2020 JP 2020216080
(71) Applicant: MITSUBISHI GAS CHEMICAL COMPANY, INC., Chiyoda-ku Tokyo 100-8324 (JP)
(72) Inventor: IMAGAWA Yousuke, Tokyo 125-8601 (JP); TAKEMURA Kouhei, Tokyo 125-8601 (JP); SUGIHARA Ryosuke, Tokyo 125-8601 (JP); SADO Mariko, Tokyo 125-8601 (JP)
(74) Representative: Müller-Boré & Partner Patentanwälte PartG mbB
(86) International application number: PCT/JP2021/036543
(87) International publication number: WO 2022/137715

(57) **Abstract**

According to the present invention, there can be provided a composition, comprising:
Compound (a) represented by the following formula (1): 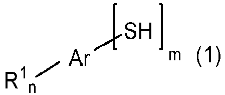 wherein
Ar represents an aromatic ring,
m represents an integer of 2 to 8,
n represents an integer of 0 to 6,
provided that m + n is the number of carbon atoms constituting the aromatic ring, or less, and
R¹ each independently represents an alkylthio group, a halogen group, a hydroxy group, a dialkylthiocarbamoyl group, or a dialkylcarbamoylthio group; and
Compound (b) represented by the following formula (2): 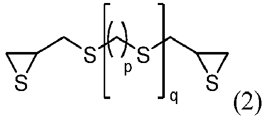 wherein
p represents an integer of 0 to 4, and
q represents an integer of 0 to 2.

## Description

### Technical Field

The present invention relates to a composition, and an optical material and a lens using the same.

### Background Art

An optical material, in particular, an optical material used for spectacle lenses is required to have optical performance such as heat resistance, low specific gravity, high transparency, low yellowness, high refractive index, and high Abbe number. In recent years, further performance improvement has been desired, and in particular, it has been desired to develop an optical material having a high refractive index and a high Abbe number.

As a material for realizing a high refractive index and a high Abbe number, a polymerizable composition for optical materials, in which an episulfide compound is used, has attracted attention. For example, Patent Literature 1 reports that, in recent years, a large number of organic compounds having sulfur atoms have been developed for the purpose of achieving high refractive index and high Abbe number.

Among others, it has been known that a polyepisulfide compound having sulfur atoms brings a good balance between refractive index and Abbe number (Patent Literature 1). According to optical materials obtained from the polyepisulfide compounds of these inventions, a high refractive index of 1.7 or more has been achieved. However, a material having a further higher refractive index has been desired, and an optical material, which comprises a composition for optical materials, comprising an organic compound with a cyclic skeleton containing sulfur, selenium or tellurium atoms, has been proposed. The refractive index of such an optical material has reached 1.73 or more (Patent Literature 2).

### Citation List

### Patent Literature

Patent Literature 1: JP Patent Publication (Kokai) No. 09-110979 A (1997)
Patent Literature 2: Japanese Patent No. 6773033

### Summary of Invention

### Technical Problem

According to the polymerizable composition disclosed in Patent Literature 2, an optical material having a high refractive index can be obtained. However, such an optical material having a high refractive index has not had sufficient oxidation resistance, and thus, the optical material has tended to be colored upon long-term preservation or in a step that needs a heat treatment. Hence, it is an object of the present invention to provide a composition, from which an optical material excellent in terms of high refractive index and oxidation resistance can be obtained.

### Solution to Problem

The present inventors have conducted intensive studies directed towards achieving the aforementioned object. As a result, the present inventors have found that the aforementioned object can be achieved by combining a thiol compound having an aromatic skeleton with a polyepisulfide compound, thereby completing the present invention.

Specifically, the present invention is, for example, as follows.

[1] A composition, comprising:
   Compound (a) represented by the following formula (1): 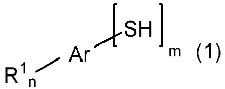
   wherein
   Ar represents an aromatic ring,
   m represents an integer of 2 to 8,
   n represents an integer of 0 to 6,
   provided that m + n is the number of carbon atoms constituting the aromatic ring, or less, and
   R¹ each independently represents an alkylthio group, a halogen group, a hydroxy group, a dialkylthiocarbamoyl group, or a dialkylcarbamoylthio group; and
   Compound (b) represented by the following formula (2): 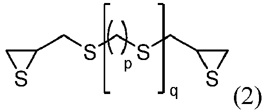
   wherein
   p represents an integer of 0 to 4, and
   q represents an integer of 0 to 2.
[2] The composition according to the above [1], wherein m is 2 or 3.
[3] The composition according to the above [1] or [2], wherein m + n is 2 to 6.
[4] The composition according to any one of the above [1] to [3], wherein the content of the Compound (a) is 1% to 30% by mass, with respect to the total mass of the composition.
[5] The composition according to any one of the above [1] to [4], further comprising sulfur.
[6] The composition according to any one of the above [1] to [5], further comprising 1,2,3,5,6-pentathiepane (c).
[7] The composition according to any one of the above [1] to [6], further comprising polythiol (d).
[8] The composition according to the above [7], wherein the polythiol (d) comprises at least one selected from the group consisting of 1,2,6,7-tetramercapto-4-thiaheptane, methanedithiol, (sulfanylmethyldisulfanyl)methanethiol, bis(2-mercaptoethyl)sulfide, 2,5-bis(mercaptomethyl)-1,4-dithiane, 1,2-bis(2-mercaptoethylthio)-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio)propane, tetramercaptopentaerythritol, 1,3-bis(mercaptomethyl)benzene, 1,4-bis(mercaptomethyl)benzene, and thiiranemethanethiol.
[9] The composition according to any one of the above [1] to [8], further comprising a preliminary polymerization catalyst.
[10] The composition according to the above [9], wherein the preliminary polymerization catalyst comprises at least one selected from the group consisting of 2-mercapto-1-methylimidazole, 2-methyl-N-imidazole, and 1,2,2,6,6-pentamethylpiperidyl methacrylate.
[11] A precured product prepared by subj ecting the composition according to any one of the above [1] to [10] to preliminary polymerization.
[12] An optical material prepared by curing the composition according to any one of the above [1] to [10] or the precured product according to the above [11].
[13] An optical lens, comprising the optical material according to the above [12].

### Advantageous Effects of Invention

According to the present invention, provided is a composition, from which an optical material that is excellent in terms of high refractive index and oxidation resistance can be obtained.

### Description of Embodiments

Hereinafter, the present invention will be described in detail in the following embodiments and illustrative examples. However, these embodiments and illustrative examples are not intended to limit the scope of the present invention, and the present invention can be arbitrarily modified and carried out within a range in which it is not deviated from the spirit of the present invention.

### < Composition >

The composition according to the present invention comprises Compound (a) represented by a formula (1) and a polyepisulfide compound (b) represented by a formula (2). The composition according to the present invention may further comprise sulfur, 1,2,3,5,6-pentathiepane (c), polythiol (d), a polymerizable compound, a preliminary polymerization catalyst, a polymerization catalyst, a polymerization modifier, additives, and the like.

By allowing the composition to comprise Compound (a) represented by the formula (1), namely, a thiol compound having an aromatic skeleton, a cured product (optical material) to be obtained can have a high refractive index and improved oxidation resistance. Thus, the present composition is preferably a composition for optical materials.

### [Compound (a)]

Compound (a) is represented by the following formula (1):

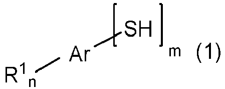

In the above formula (1), m represents an integer of 2 to 8, and from the viewpoint of color tone and the ease of synthesis, m is preferably 2, 3 or 6, more preferably 2 or 3, and further preferably 3.

In the above formula (1), n represents an integer of 0 to 6, and n is preferably 0 to 2, more preferably 0 or 1, and further preferably 0.

In the above formula (1), m + n is the number of carbon atoms constituting an aromatic ring represented by Ar, or less, and m + n is preferably 8 or less (m + n ≤ 8), more preferably 2 to 6 or 3 to 6, further preferably 2 or 3, and particularly preferably 3. Besides, when m + n is 3, heat resistance favorably becomes much higher. Moreover, the phrase "the number of carbon atoms constituting the aromatic ring, or less" means that m + n does not exceed the number of carbon atoms possessed by the aromatic ring. For example, in the case of a benzene ring that is an aromatic ring consisting of carbon and hydrogen, since the number of carbon atoms constituting the ring is 6, m + n is 6 or less. On the other hand, in the case of a thiadiazole ring that is a heteroaromatic ring, since the number of carbon atoms constituting the ring is 2, m + n is 2 or less.

In the above formula (1), R¹ each independently represents an alkylthio group, a halogen group, a hydroxy group, a dialkylthiocarbamoyl group, or a dialkylcarbamoylthio group.

Examples of the alkylthio group may include, but are not particularly limited to, a methylthio group, an ethylthio group, a propylthio group, a butylthio group, an isobutylthio group, a sec-butylthio group, a tert-butylthio group, a pentylthio group, and a hexylthio group.

Examples of the halogen group may include, but are not particularly limited to, a fluorine group (-F), a chlorine group (-Cl), a bromine group (-Br), and an iodine group (-I).

Examples of the dialkylthiocarbamoyl group may include, but are not particularly limited to, a dimethylthiocarbamoyl group, a diethylthiocarbamoyl group, and an ethylmethylthiocarbamoyl group.

Examples of the dialkylcarbamoylthio group may include, but are not particularly limited to, a dimethylcarbamoylthio group, a diethylcarbamoylthio group, and an ethylmethylcarbamoylthio group.

In the above formula (1), Ar represents an aromatic ring. Examples of the aromatic ring may include an aromatic ring consisting of carbon and hydrogen, such as aromatic hydrocarbon, and a heteroaromatic ring (an aromatic ring containing a heteroatom). Besides, the aromatic ring represented by Ar contains 2 or more carbon atoms, preferably 2 to 18 carbon atoms, more preferably 2 to 12 carbon atoms, and further preferably 3 to 6 carbon atoms. Moreover, Ar is preferably a 5-membered ring or a 6-membered ring, and more preferably a 6-membered ring. From the viewpoint of refractive index and the ease of synthesis, the aromatic ring is preferably benzene, naphthalene, fluorene, triazine or thiadiazole, is more preferably benzene or naphthalene, and is further preferably benzene.

Specific examples of Compound (a) may include, but are not particularly limited to: dimercaptobenzene compounds such as 1,3-dimercaptobenzene and 1,4-dimercaptobenzene; trimercaptobenzene compounds such as 1,3,5-trimercaptobenzene, 1,2,4-trimercaptobenzene, and 1,2,5-trimercaptobenzene; alkylthio group-substituted dimercaptobenzene compounds such as 1-methylthio-3,5-dimercaptobenzene, 1-methylthio-2,4-dimercaptobenzene, 1-methylthio-2,5-dimercaptobenzene, 1-ethylthio-3,5-dimercaptobenzene, and 1-t-butylthio-3,5-dimercaptobenzene; halogen group-substituted dimercaptobenzene compounds such as 1-fluoro-3,5-dimercaptobenzene, 1-chloro-3,5-dimercaptobenzene, 1-bromo-3,5-dimercaptobenzene, 1-chloro-2,4-dimercaptobenzene, and 1-chloro-2,5-dimercaptobenzene; hydroxy group-substituted dimercaptobenzene compounds such as 1-hydroxy-3,5-dimercaptobenzene, 1-hydroxy-2,4-dimercaptobenzene, and 1-hydroxy-2,5-dimercaptobenzene; dialkylthiocarbamoyl group-substituted dimercaptobenzene compounds such as 1-dimethylthiocarbamoyl-3,5-dimercaptobenzene, 1-ethlymethylthiocarbamoyl-3,5-dimercaptobenzene, 1-ethlymethylthiocarbamoyl-2,4-dimercaptobenzene, and 1-ethlymethylthiocarbamoyl-2,5-dimercaptobenzene; and dialkylcarbamoylthio group-substituted dimercaptobenzene compounds such as 1-dimethylcarbamoylthio-3,5-dimercaptobenzene, 1-ethlymethylcarbamoylthio-3,5-dimercaptobenzene, 1-dimethylcarbamoylthio-2,4-dimercaptobenzene, and 1-dimethylcarbamoylthio-2,5-dimercaptobenzene. Among these compounds, Compound (a) is preferably 1,3-dimercaptobenzene, 1,4-dimercaptobenzene, 1,3,5-trimercaptobenzene, 1-alkylthio-3,5-dimercaptobenzene, 1-halo-3,5-dimercaptobenzene, 1-hydroxy-3,5-dimercaptobenzene, 1-dialkylthiocarbamoyl-3,5-dimercaptobenzene, 1-alkylcarbamoylthio-3,5-dimercaptobenzene, 1,5-naphthalenedithiol, 2,7-naphthalenedithiol, 9,9-bis(4-mercaptophenyl)fluorene, thiocyanuric acid, or Bismuththiol; and is more preferably 1,3-dimercaptobenzene, 1,4-dimercaptobenzene, 1,3,5-trimercaptobenzene, or 1,5-naphthalenedithiol. From the viewpoint of achieving a higher refractive index, Compound (a) is further preferably 1,3,5-trimercaptobenzene. Besides, the aforementioned Compound (a) may be used alone, or may be used in combination of two or more types.

The content of Compound (a) is preferably 0.1% to 30% by mass, more preferably 0.5% to 25% by mass, further preferably 1% to 20% by mass, and particularly preferably 2% to 10% by mass, with respect to the total mass of the composition. When the content of Compound (a) is within the above-described range, a sufficiently high refractive index and the effect of improving oxidation resistance can be obtained.

### [Compound (b)]

Compound (b) is represented by the following formula (2):

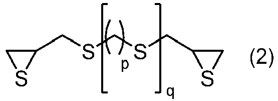

In the above formula (2), p represents an integer of 0 to 4, and p is preferably 0 to 2, and more preferably 0 or 1.

In the above formula (2), q represents an integer of 0 to 2, and q is preferably 0 or 1.

Specific examples of Compound (b) may include, but are not particularly limited to, bis(β-epithiopropyl)sulfide and bis(β-epithiopropyl)disulfide. Among these compounds, bis(β-epithiopropyl)sulfide is preferable. The aforementioned Compound (b) may be used alone, or may be used in combination of two or more types. It is to be noted that bis(β-epithiopropyl)sulfide corresponds to a compound, wherein p = q = 0 in the above formula (2), whereas bis(β-epithiopropyl)disulfide corresponds to a compound, wherein p = 0 and q = 1 in the above formula (2).

The content of Compound (b) is preferably 40% to 90% by mass, more preferably 45% to 85% by mass, and particularly preferably 50% to 80% by mass, with respect to the total mass of the composition. The content of Compound (b) that is within the above-described range is preferable because curing reactivity can be improved, while ensuring heat resistance.

### [Sulfur]

In one embodiment, the composition may further comprise sulfur. By allowing the compound to comprise sulfur, the refractive index of an optical material to be obtained can be improved.

The shape of sulfur is not particularly limited, and any shape may be adopted. Specific shapes of sulfur may include powder sulfur, colloidal sulfur, precipitated sulfur, crystalline sulfur, and sublimated sulfur. From the viewpoint of a dissolution rate, among these, powder sulfur is preferable.

The particle size (diameter) of sulfur is smaller than, preferably a 10-mesh sieve (sieve mesh size: 1.70 mm), more preferably a 30-mesh sieve (sieve mesh size: 500 µm), and further preferably a 60-mesh sieve (sieve mesh size: 250 µm). The particle size of sulfur that is smaller than a 10-mesh sieve is preferable because sulfur is easily dissolved.

The purity of sulfur is not particularly limited, and it is preferably 98% or more, more preferably 99.0% or more, further preferably 99.5% or more, and particularly preferably 99.9% or more. The purity of sulfur that is 98% or more is preferable because the color tone of an optical material to be obtained is further improved.

The content of sulfur is preferably 0% to 30% by mass, more preferably 0.1% to 25% by mass, and further preferably 1% to 25% by mass, with respect to the total mass of the composition. The content of sulfur that is within the above-described range is preferable because the composition becomes excellent in terms of a balance between refractive index-improving effect and solubility.

### [1,2,3,5,6-Pentathiepane (c)]

1,2,3,5,6-Pentathiepane (c) is a compound represented by the following formula (3), and has the effect of improving the refractive index of an optical material to be obtained.

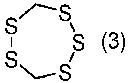

The method of obtaining 1,2,3,5,6-pentathiepane (c) is not particularly limited. A commercially available product may be used, or 1,2,3,5,6-pentathiepane (c) may be collected and extracted from natural products such as crude oil or plants and animals. Otherwise, 1,2,3,5,6-pentathiepane (c) may be synthesized according to a known method. Examples of the synthetic method applied to synthesize 1,2,3,5,6-pentathiepane (c) may include the methods described in N. Takeda et al., Bull. Chem. Soc. Jpn., 68, 2757 (1995), F. Feher et al., Angew. Chem. Int. Ed., 7, 301 (1968), G. W. Kutney et al., Can. J. Chem, 58, 1233 (1980), etc.

The content of 1,2,3,5,6-pentathiepane is preferably 0% to 40% by mass, more preferably 0.1% to 35% by mass, and further preferably 1% to 30% by mass, with respect to the total mass of the composition. The content of 1,2,3,5,6-pentathiepane (c) that is within the above-described range is preferable because an optical material to be obtained can achieve both high refractive index and high transparency.

### [Polythiol (d)]

Polythiol (d) means a compound having two or more thiol groups (-SH) in a single molecule thereof. Herein, compounds corresponding to Compound (a) (i.e. a thiol compound having an aromatic skeleton) are not included in polythiol (d).

Polythiol (d) is not particularly limited. From the viewpoint of achieving a high color tone-improving effect, 1,2,6,7-tetramercapto-4-thiaheptane, methanedithiol, (sulfanylmethyldisulfanyl)methanethiol, bis(2-mercaptoethyl)sulfide, 2,5-bis(mercaptomethyl)-1,4-dithiane, 1,2-bis(2-mercaptoethylthio)-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio)propane, tetramercaptopentaerythritol, 1,3-bis(mercaptomethyl)benzene, 1,4-bis(mercaptomethyl)benzene, and thiiranemethanethiol are preferable; bis(2-mercaptoethyl)sulfide, 1,2,6,7-tetramercapto-4-thiaheptane, methanedithiol, (sulfanylmethyldisulfanyl)methanethiol, and 4,8-dimercaptomethyl-1,11-dimercapto-3,6,9-trithiaundecane are more preferable; and bis(2-mercaptoethyl)sulfide, 1,2,6,7-tetramercapto-4-thiaheptane, and 4,8-dimercaptomethyl-1,11-dimercapto-3,6,9-trithiaundecane are further preferable. Besides, the aforementioned polythiol (d) may be used alone, or may be used in combination of two or more types.

The content of polythiol (d) is preferably 0.1% to 30% by mass, more preferably 0.1% to 20% by mass, further preferably 0.5% to 20% by mass, and particularly preferably 1% to 15% by mass, with respect to the total mass of the composition. The content of polythiol (d) that is within the above-described range is preferable because a better balance between color tone-stabilizing effect and heat resistance can be obtained.

### [Polymerizable compound]

In one embodiment, the composition may further comprise a polymerizable compound. By allowing the composition to comprise such a polymerizable compound, the physical properties of the optical material can be adjusted. It is to be noted that the "polymerizable compound" means a compound that can be copolymerized with Compound (b).

The above-described polymerizable compound is not particularly limited, as long as it is a compound that can be copolymerized with Compound (b). Examples of the polymerizable compound may include an episulfide compound other than Compound (b), a vinyl compound, a methacrylic compound, an acrylic compound, and an allyl compound. These compounds may be used alone, or may be used in combination of two or more types.

The additive amount of the polymerizable compound is not particularly limited, as long as it does not inhibit the effects of the present invention. For example, the additive amount of the polymerizable compound is preferably 0% to 30% by mass, more preferably 1% to 30% by mass, and further preferably 1% to 20% by mass, with respect to the total mass of the composition.

### [Preliminary polymerization catalyst]

In one embodiment, the composition may further comprise a preliminary polymerization catalyst. By allowing the composition to comprise such a preliminary polymerization catalyst, the after-mentioned precured product can be favorably produced.

Examples of the preliminary polymerization catalyst may include, but are not particularly limited to, imidazoles, phosphines, thioureas, quaternary ammonium salts, quaternary phosphonium salts, tertiary sulfonium salts, secondary iodonium salts, and hindered amine. From the viewpoint of achieving good compatibility with the composition, among these, the preliminary polymerization catalyst is preferably imidazoles or hindered amine.

Examples of the imidazoles may include, but are not particularly limited to, N-benzylimidazole, 4-methylimidazole, 4-ethylimidazole, 1-phenylimidazole, and 2-methyl-N-methylimidazole.

Examples of the hindered amine may include, but are not particularly limited to, hindered amines such as 1,2,2,6,6-pentamethylpiperidyl methacrylate, 1,2,2,6,6-pentamethylpiperidyl acrylate, and 1,2,2,6,6-pentamethylpiperidyl-4-vinyl benzoate.

Among these, the preliminary polymerization catalyst preferably comprises at least one selected from the group consisting of 2-mercapto-1-methylimidazole, 2-methyl-N-methylimidazole, and 1,2,2,6,6-pentamethylpiperidyl methacrylate. Besides, the aforementioned preliminary polymerization catalyst may be used alone, or may be used in combination of two or more types.

The additive amount of the preliminary polymerization catalyst cannot be determined unambiguously, since it is changed depending on the components of the composition, the mixing ratio, and the polymerization curing method. In general, the additive amount of the preliminary polymerization catalyst is preferably 0.0001% by mass to 10% by mass, and more preferably 0.003% by mass to 3.0% by mass, with respect to the total mass (100% by mass) of Compound (a), polythiol (b), Compound (c), and sulfur. The additive amount of the preliminary polymerization catalyst that is 0.0001% by mass or more is preferable because the preliminary polymerization reaction favorably progresses. On the other hand, the additive amount of the preliminary polymerization catalyst that is 10% by mass or less is preferable because oxidation resistance becomes high.

### [Polymerization catalyst]

In one embodiment, the composition may further comprise a polymerization catalyst. By allowing the composition to comprise such a polymerization catalyst, the composition is favorably polymerized, so that an optical material can be produced.

Examples of the polymerization catalyst may include, but are not particularly limited to, amines, phosphines, quaternary ammonium salts, quaternary phosphonium salts, tertiary sulfonium salts, secondary iodonium salts, mineral acids, Lewis acids, organic acids, silicic acids, tetrafluoroboric acids, peroxides, azo compounds, condensates of aldehydes and ammonia compounds, guanidines, thioureas, thiazoles, sulfenamides, thiurams, dithiocarbamates, xanthogenates, and acid phosphates. Among these, the polymerization catalysts are preferably amines, phosphines, quaternary ammonium salts, and quaternary phosphonium salts. Besides, these polymerization catalysts may be used alone, or may be used in combination of two or more types.

The additive amount of the polymerization catalyst is preferably 0.0001% to 10% by mass, and more preferably 0.01% to 3% by mass, with respect to the total mass of the composition.

### [Polymerization modifier]

In one embodiment, the composition may further comprise a polymerization modifier.

Examples of the polymerization modifier may include, but are not particularly limited to, halides of Groups 13 to 16 in the long-term periodic table. Among these, the halides of silicon, germanium, tin, and antimony are preferable, and the chlorides of germanium, tin, and antimony having alkyl groups are more preferable. These polymerization modifiers may be used alone, or may be used in combination of two or more types.

The additive amount of the polymerization modifier is preferably 0.0001% to 5.0% by mass, and more preferably 0.01% to 2% by mass, with respect to the total mass of the composition.

### [Additive(s)]

In one embodiment, the composition may further comprise an additive(s). Examples of the additive(s) may include, but are not particularly limited to, an antioxidant, a bluing agent, an ultraviolet ray absorber, a deodorant, an adhesion improver, a mold release improver, and a radical polymerization initiator. These additives may be used alone, or may be used in combination of two or more types.

The content of the additive(s) is preferably 0% to 10% by mass, and more preferably 0.5% to 10% by mass, with respect to the total mass of the composition.

### [Constitution of composition]

In one embodiment, the composition preferably has the following constitution. Specifically, the composition comprises the following substances, with respect to the total amount of the composition:
Compound (a): 0.1% to 25% by mass, and preferably 0.5% to 20% by mass;
Compound (b): 45% to 85% by mass, and preferably 50% to 80% by mass;
Sulfur: 0% to 30% by mass, and preferably 1% to 25% by mass;
Pentathiepane (c): 0% to 40% by mass, and preferably 1% to 30% by mass;
Polythiol (d): 0% to 30% by mass, and preferably 1% to 20% by mass;
Preliminary polymerization catalyst: 0% to 5% by mass, and preferably 0% to 3% by mass;
Polymerization catalyst: 0% to 5% by mass, and preferably 0.0001% to 3% by mass; and
Polymerization modifier: 0% to 5% by mass, and preferably 0.0001% to 3% by mass.

### < Method for producing composition >

The method for producing the aforementioned composition is not particularly limited, and the composition can be produced according to a known method. Specifically, Compound (a) and Compound (b), and as necessary, sulfur, 1,2,3,5,6-pentathiepane (c), polythiol (d), and the like are mixed with one another to produce the composition.

### < Precured product >

According to one embodiment of the present invention, a precured product is provided. The precured product is formed by preliminary polymerization of the aforementioned composition. It is preferable to obtain a precured product, from the viewpoint of a possible reduction in the viscosity-increasing rate, the improvement of the transparency of the optical material, the ease of handling, etc. Besides, in the present description, the "precured product" means a liquid having a viscosity of 5,000 mps or less, and the precured product comprises a polymer, a partial polymer, an oligomer, etc., formed by a polymerization reaction of at least one of Compound (a), episulfide compound (b), Compound (c), sulfur, and a polymerizable compound. Besides, in the present description, the value measured according to the following method is adopted as a "viscosity."

### [Viscosity measurement method]

Using Cone & Plate Viscometer DV2THA CP (manufactured by Brookfield AMETEK), the viscosity of a precured product at 30°C is measured.

### < Method for producing precured product >

According to one embodiment of the present invention, a method for producing a precured product is provided. The method for producing a precured product comprises a preliminary polymerization step of subjecting a composition to preliminary polymerization.

### [Preliminary polymerization step]

The preliminary polymerization step is a step of subjecting a composition to preliminary polymerization.

As such a composition, the aforementioned composition is used. The composition preferably comprises a preliminary polymerization catalyst.

From the viewpoint of preferably performing the after-mentioned polymerization step after completion of the preliminary polymerization, the preliminary polymerization step is preferably carried out, after the composition has been poured into a form such as a mold. At this time, from the viewpoint of enhancing the quality of an optical material, impurities are preferably removed by filtration through a filter with a pore diameter of about 0.1 to 5 µm before the pouring of the composition into a form.

The temperature applied in the preliminary polymerization is preferably -10°C to 160°C, more preferably 0°C to 100°C, and further preferably 20°C to 80°C.

The time applied in the preliminary polymerization is preferably 0.1 to 480 minutes, more preferably 0.1 to 420 minutes, and further preferably 0.1 to 360 minutes.

In one embodiment, the preliminary polymerization is carried out preferably at - 10°C to 160°C for 0.1 to 480 minutes, more preferably at 0°C to 100°C for 0.1 to 420 minutes, and further preferably at 20°C to 80°C for 0.1 to 360 minutes.

The preliminary polymerization may be carried out under normal pressure, or under increased pressure, or under reduced pressure. When the preliminary polymerization is carried out under reduced pressure, hydrogen sulfide that promotes the reaction is removed. Thus, in general, the reaction moderately progresses under reduced pressure, compared with under normal pressure. Besides, when the preliminary polymerization is carried out under normal pressure, the reaction may be carried out in the atmosphere, or may also be carried out in inert gas.

In the preliminary polymerization step, it is preferable to detect the progression degree of the reaction of the preliminary polymerization. Examples of the detection method may include, but are not particularly limited to, liquid chromatography, viscosity measurement, specific gravity measurement, and refractive index measurement. Among these methods, the refractive index measurement is preferably carried out because it is simple. Besides, these detection methods may be used alone, or may be used in combination of two or more types.

The progression degree of the reaction of preliminary polymerization is preferably detected in line. In particular, when the preliminary polymerization is carried out under increased pressure or under reduced pressure, it is more preferable to carry out detection in line because it is not necessary to release the increased pressure or the reduced pressure in order to obtain a measurement sample. In the case of carrying out detection in line, for example, when the refractive index is measured, the detection unit of a refractometer is immersed in the composition before the preliminary polymerization and the reaction solution of the preliminary polymerization, so that an increase in the refractive index attended with the progress of the reaction can be detected, and the progression degree of the reaction can be controlled. Besides, in the case of a detection method in which a measured value such as a refractive index is changed depending on temperature, it is preferable that a measurement temperature, a refractive index, a refractive index at a reference temperature, and the like are subjected to a multiple regression analysis, and that the relationship between the temperature of the detection unit and the refractive index is determined in advance. Specifically, it is preferable to use a refractometer equipped with a temperature correction function capable of automatically converting the measured refractive index to the refractive index at a reference temperature. As an in-line type refractometer, a system of identifying the angle of a prism-reflected light with a CCD cell, using a light emitting diode as a light source, or the like may be used.

### < Optical material >

According to one embodiment of the present invention, an optical material is provided. The optical material is formed by curing the aforementioned composition or the aforementioned precured product. Specifically, the optical material is a cured product of the composition or the precured product.

The optical material according to the present embodiment is excellent in terms of high refractive index and oxidation resistance.

Specifically, the refractive index of the optical material is preferably 1.71 or more, more preferably 1.72 or more, further preferably 1.73 or more, and particularly preferably 1.75 or more. That is to say, the refractive index of the optical material obtained from the aforementioned composition is preferably 1.71 or more, more preferably 1.72 or more, further preferably 1.73 or more, and particularly preferably 1.75 or more. It is to be noted that the value of the "refractive index" is measured by the method described in the Examples.

Moreover, with regard to the oxidation resistance of the optical material, the ΔYI value is preferably 2 or less, more preferably 1.8 or less, further preferably 1.5 or less, and particularly preferably 1.0 or less. That is to say, the ΔYI value of the optical material obtained from the aforementioned composition is preferably 2 or less, more preferably 1.8 or less, further preferably 1.5 or less, and particularly preferably 1.0 or less. Besides, in the present description, the "ΔYI value"" is measured by the method described in the Examples.

Since the optical material according to the present embodiment is excellent in terms of high refractive index and oxidation resistance, it is possible to mix various comonomers into the composition and to increase the mixed amount, so that it becomes possible to design an optical material having a wide range of physical properties.

### < Method for producing optical material >

According to one embodiment of the present invention, a method for producing an optical material is provided. The production method comprises a polymerization step of polymerizing the aforementioned composition or the aforementioned precured product.

### [Polymerization step]

The polymerization step is a step of polymerizing the aforementioned composition or the aforementioned precured product.

The polymerization step is generally carried out by pouring the composition or the precured product into a form such as a mold, and then performing polymerization. In the case of using the composition, from the viewpoint of enhancing the quality of an optical material, impurities are preferably removed by filtration through a filter with a pore diameter of about 0.1 to 5 µm before the pouring of the composition or the precured product into a form.

In one embodiment, the polymerization step includes a step of increasing the temperature to a polymerization temperature, a step of retaining the composition or the precured product at the polymerization temperature, and a step of decreasing the temperature.

The above-described polymerization may be carried out at multiple stages. That is, the polymerization step may have two or more steps of retaining the composition or the precured product at the polymerization temperature. In one embodiment, the polymerization step includes a step of increasing the temperature to a first polymerization temperature, a step of retaining the composition or the precured product at the first polymerization temperature, a step of increasing the temperature to a second polymerization temperature, a step of retaining the composition or the precured product at the second polymerization temperature, and a step of decreasing the temperature. In this case, the first polymerization temperature is lower than the second polymerization temperature. Moreover, in another embodiment, the polymerization step includes a step of increasing the temperature to a first polymerization temperature, a step of retaining the composition or the precured product at the first polymerization temperature, a step of decreasing the temperature to a second polymerization temperature, a step of retaining the composition or the precured product at the second polymerization temperature, and a step of decreasing the temperature. In this case, the first polymerization temperature is higher than the second polymerization temperature.

The temperature-increasing rate in the step of increasing the temperature is preferably 0.1°C to 100°C/h. Moreover, the temperature-decreasing rate in the step of decreasing the temperature is preferably 0.1°C to 100°C/h.

The polymerization temperature is generally -10°C to 140°C, and preferably 0°C to 140°C.

The polymerization times is generally 1 to 100 hours, and preferably 1 to 72 hours. It is to be noted that, in the present description, the "polymerization time" means a period of time including the time required for the temperature-increasing step and the time required for the temperature-decreasing step.

Besides, after completion of the polymerization, the obtained optical material is preferably subjected to an annealing treatment. By performing such an annealing treatment on the optical material, distortion of the optical material can be prevented or suppressed. Besides, the temperature applied in the annealing treatment is preferably 50°C to 150°C. In addition, the time applied in the annealing treatment is preferably 10 minutes to 5 hours.

A surface treatment such as staining, hard coating, impact-resistant coating, an anti-reflective treatment, or an antifogging treatment may be performed on the obtained optical material, as necessary.

### < Intended use of optical material >

The aforementioned optical material is useful for various types of intended uses, such as optical members, machine component materials, electrical and electronic component materials, automotive component materials, civil engineering and construction materials, molding materials, and materials for paints and adhesives. Among these, the optical material is preferably used for: optical uses including lenses such as lenses for glasses, imaging lenses for (digital) cameras, light beam focusing lenses, and lenses for light diffusion, encapsulants for LEDs, optical adhesives, bonding materials for light transmission, and transparent glasses or cover glasses, such as optical fibers, prisms, filters, diffraction gratings, watch glasses, and cover glasses for display units; and display device uses including substrates for display elements, such as LCDs, organic ELs and PDPs, substrates for color filters, substrates for touch panels, information recording substrates, display backlights and light guide plates, and coating agents (coating films) such as display protective films, anti-reflective films and anti-fogging films. In particular, the above-described optical material is preferably used for intended uses such as optical lens, prisms, optical fibers, information recording substrates, and filters; and is more preferably used for optical lens. That is to say, in one embodiment, an optical lens comprising the aforementioned optical material is provided.

Since the optical lens obtained from the composition according to the present invention is excellent in terms of stability, hue, transparency and the like, it can be used in the field in which expensive glass lenses having high refractive index, such as telescopes, binoculars, and TV projectors, have been conventionally used, and thus, it is extremely useful. The optical lens is preferably used in the form of an aspherical lens, as necessary.

### Examples

Hereinafter, the present invention will be specifically described in the following examples. However, the embodiments of the present invention can be appropriately modified, as long as the effects of the present invention can be obtained.

Analysis and/or evaluation of an optical material were carried out according to the following methods.

### [Refractive index of optical material]

Using the digital precision refractometer KPR-2000 (manufactured by Shimadzu Corporation), the refractive index of an optical material at an e line (546.1 nm) at 25°C was measured.

### [Evaluation of oxidation resistance of optical material]

An optical material having a thickness of 2.0 mm was heated in the atmosphere at 110°C for 5 hours, and thereafter, an increase in the ΔYI value was measured. The YI value was measured at 25°C, using the spectrophotometer CM-5 (manufactured by Konica Minolta Japan, Inc.).

### [Synthetic Example 1: Synthesis of 1,3,5-trimercaptobenzene (hereinafter abbreviated as "TMB")]

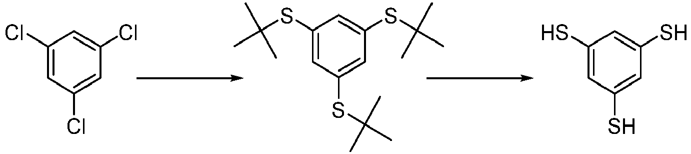

TMB was synthesized with reference to Beilstein Journal of Organic Chemistry, 8, 461-471, No. 53; 2012. Specifically, TMB was synthesized as follows.

That is, a four-necked flask equipped with a thermometer and a dropping funnel was subjected to nitrogen substitution. Thereafter, 400 g of N-methylpyrrolidone and 82.7 g (2067 mmol) of sodium hydroxide were added into the flask, followed by stirring at 5°C. Subsequently, 186.4 g (2067 mmol) of t-butylthiol was added dropwise to the reaction mixture, followed by stirring at 5°C for 3 hours. Further, 50.0 g (275.56 mmol) of 1,3,5-trichlorobenzene was added to the reaction mixture, and the temperature of the thus obtained mixture was increased to 120°C, and the mixture was then stirred for 24 hours. Subsequently, the reaction solution was cooled to 25°C, and 400 g of toluene was added thereto. The obtained mixture was washed with 400 g of water three times, and the solvent was then distilled away, so as to obtain 45.3 g (132.3 mmol) of a crude product of 1,3,5-tris(t-butylthio)benzene (TTBB).

The obtained crude product of TTBB (45.3 g (132.3 mmol)) was placed in a three-necked flask equipped with a thermometer, and the reaction vessel was subjected to nitrogen substitution. Thereafter, 436 g of toluene was added into the flaks, and the obtained mixture was then stirred at 20°C. Subsequently, 19.4 g (145.4 mmol) of aluminum chloride was added to the reaction mixture, and the thus obtained mixture was then stirred for 3 hours. After that, 225 g of 20% sulfuric acid was added to the reaction mixture, the toluene layer was then washed with water three times, and the solvent was then distilled away, so as to obtain 16.1 g (92.4 mmol) of a crude product of TMB.

The obtained crude product of TMB was purified with a silica gel column to obtain a fraction (a-1) of TMB 1 (TMB with a purity of 100%), and two fractions (a-2 and a-3) containing TMB1 and TMB2 or TMB3. The obtained results are shown in Table 1 below.

### [Synthetic Example 2: Synthesis of TMB]

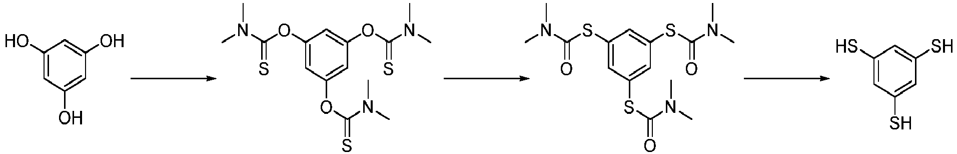

TMB was synthesized with reference to Bulletin de la Societe Chimique de France, (2), 302-8; 1987. Specifically, TMB was synthesized as follows.

That is, 30.0 g (238 mmol) of phloroglucinol and 375 g of N,N-dimethylformamide were added into a three-necked flask equipped with a thermometer. Thereafter, the reaction solution was cooled to 5°C, and 133.4 g (1189 mmol) of 1,4-diazabicyclo[2.2.2]octane and 147.0 g (1189 mmol) of dimethylthiocarbamoyl chloride were then added to the reaction solution, followed by stirring the obtained mixture for 24 hours. Subsequently, 300 g of chloroform was added to the reaction mixture, and the obtained mixture was then washed with 300 g of a 10% NaOH aqueous solution three times. The solvent was distilled away to obtain 73.8 g (190 mmol) of a crude product of 1,3,5-tris(dimethylthiocarbamoyl)benzene.

The obtained crude product of 1,3,5-tris(dimethylthiocarbamoyl)benzene (73.8 g) was placed in a three-necked flask equipped with a thermometer, and was then stirred at 240°C for 7 hours. Thereafter, the reaction product was cooled to 25°C, so as to obtain 73.8 g (190 mmol) of a crude product of 1,3,5-tris(dimethylcarbamoylthio)benzene.

The obtained crude product of 1,3,5-tris(dimethylcarbamoylthio)benzene (73.8 g) was placed in a three-necked flask equipped with a thermometer. Subsequently, 826 g of diethylene glycol, 89.1 g of water, and 53.4 g (952 mmol) of potassium hydroxide were added into the flask, and the obtained mixture was then stirred at 95°C for 10 hours. Thereafter, the reaction product was cooled to 25°C, and 370 g of 20% sulfuric acid and 740 g of chloroform were then added thereto. The organic layer was washed with water three times, and the solvent was then distilled away, so as to obtain 15.9 g (91 mmol) of a crude product of TMB.

The obtained crude product of TMB was purified with a silica gel column to obtain a fraction (a-4) of TMB 1 (TMB with a purity of 100%), and three fractions (a-5 to a-7) containing TMB1, and TMB4 or TMB5 or TMB6. The obtained results are shown in Table 1 below.

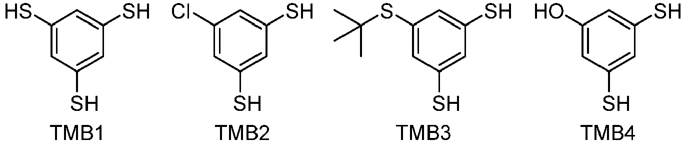

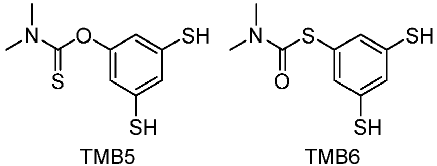

**[Table 1]**

| | | TMB1 | TMB2 | TMB3 | TMB4 | TMB5 | TMB6 |
|---|---|---|---|---|---|---|---|
| Synthetic Example 1 | a-1 | 100 | | | | | |
| | a-2 | 95 | 5 | | | | |
| | a-3 | 95 | | 5 | | | |
| Synthetic Example 2 | a-4 | 100 | | | | | |
| | a-5 | 95 | | | 5 | | |
| | a-6 | 95 | | | | 5 | |
| | a-7 | 95 | | | | | 5 |

As Compounds (a) below, commercially available products were purchased and used.
a-8: 1,3-Dimercaptobenzene (manufactured by Tokyo Chemical Industry Co., Ltd.)
a-9: 1,5-Naphthalenedithiol (manufactured by Tokyo Chemical Industry Co., Ltd.)
a-10: Bismuththiol (manufactured by Tokyo Chemical Industry Co., Ltd.)

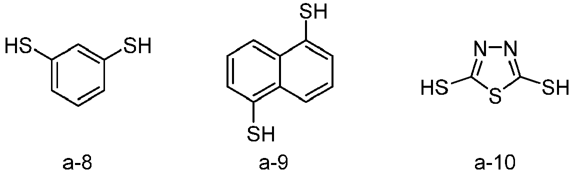

### [Raw materials]

As Compounds (b), the following Compound b-1 and Compound b-2 were prepared.
b-1: Bis(β-epithiopropyl)sulfide
b-2: Bis(β-epithiopropyl)disulfide

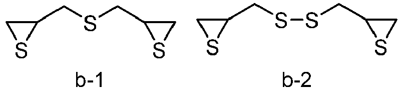

Moreover, 1,2,3,5,6-pentathiepane (c) represented by the following structural formula was prepared.

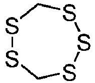

Furthermore, as polythiol (d), the following Compound d-1 to Compound d-3 were prepared.
d-1: Bis(2-mercaptoethyl)sulfide
d-2: 1,2,6,7-Tetramercapto-4-thiaheptane
d-3: 4,8-Dimercaptomethyl-1,11-dimercapto-3,6,9-trithiaundecane

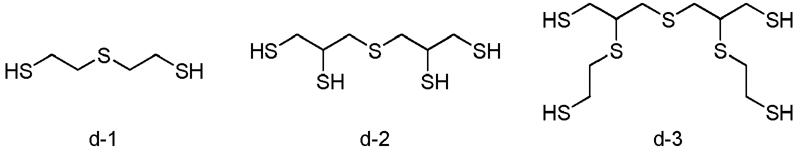

### [Example 1]

While 10 Parts by mass of Compound a-1, 90 pars by mass of Compound b-1, 0.02 parts by mass of tetra-n-butylphosphonium bromide used as a polymerization catalyst, and 0.05 parts by mass of di-n-butyltin chloride used as a polymerization modifier were mixed with one another, vacuum degassing was carried out, so as to produce a composition.

### [Examples 2 to 21 and Comparative Examples 1 to 5]

Individual compositions were produced by the same method as that in Example 1, with the exception that the constitution of the materials were changed to those shown in the following Table 2.

### [Evaluation]

The compositions produced in Example 1 to 21 and Comparative Examples 1 to 5 were each heated at 30°C for 10 hours, and the temperature was then increased to 100°C over 10 hours. Finally, the reaction products were heated at 100°C for 5 hours for polymerization curing. After cooling, the reaction products were subjected to an annealing treatment at 120°C for 30 minutes, so as to produce optical materials.

The results regarding the refractive index and oxidation resistance of the produced optical materials are shown in the following Table 2.

**[Table 2]**

| | Aromatic polythiol (a) | | Episulfide compound (b) | | Sulfur | Pentathiepane (c) | Polythiol (d) | | Refractive index | Oxidation resistance ΔYI |
|---|---|---|---|---|---|---|---|---|---|---|
| Example 1 | a-1 | 10 | b-1 | 90 | 0 | 0 | - | 0 | 1.727 | 0.1 |
| Example 2 | a-1 | 20 | b-1 | 80 | 0 | 0 | - | 0 | 1.736 | 0.1 |
| Example 3 | a-1 | 30 | b-1 | 70 | 0 | 0 | - | 0 | 1.745 | 0.1 |
| Example 4 | a-1 | 5 | b-1 | 80 | 15 | 0 | - | 0 | 1.754 | 0.9 |
| Example 5 | a-1 | 5 | b-1 | 60 | 15 | 20 | - | 0 | 1.776 | 0.6 |
| Example 6 | a-1 | 7 | b-1 | 44 | 14 | 35 | - | 0 | 1.795 | 0.9 |
| Example 7 | a-1 | 2 | b-1 | 60 | 19 | 16 | d-1 | 3 | 1.775 | 1.0 |
| Example 8 | a-1 | 3 | b-1 | 60 | 19 | 15 | d-1 | 3 | 1.775 | 0.7 |
| Example 9 | a-1 | 4 | b-1 | 60 | 19 | 14 | d-1 | 3 | 1.775 | 0.9 |
| Example 10 | a-2 | 4 | b-1 | 60 | 19 | 14 | d-1 | 3 | 1.775 | 1.0 |
| Example 11 | a-3 | 4 | b-1 | 60 | 19 | 14 | d-1 | 3 | 1.775 | 0.8 |
| Example 12 | a-5 | 4 | b-1 | 60 | 19 | 14 | d-1 | 3 | 1.775 | 0.7 |
| Example 13 | a-6 | 4 | b-1 | 60 | 19 | 14 | d-1 | 3 | 1.775 | 0.8 |
| Example 14 | a-7 | 4 | b-1 | 60 | 19 | 14 | d-1 | 3 | 1.775 | 0.9 |
| Example 15 | a-8 | 4 | b-1 | 60 | 19 | 14 | d-1 | 3 | 1.771 | 0.9 |
| Example 16 | a-9 | 4 | b-1 | 60 | 19 | 14 | d-1 | 3 | 1.774 | 0.4 |
| Example 17 | a-10 | 4 | b-1 | 60 | 19 | 14 | d-1 | 3 | 1.774 | 1.0 |
| Example 18 | a-1 | 4 | b-2 | 60 | 19 | 14 | d-1 | 3 | 1.778 | 1.0 |
| Example 19 | a-1 | 4 | b-1 | 60 | 19 | 14 | d-2 | 3 | 1.776 | 0.7 |
| Example 20 | a-1 | 4 | b-1 | 60 | 19 | 14 | d-3 | 3 | 1.775 | 0.7 |
| Example 21 | a-1 | 4 | b-1 | 56 | 21 | 14 | d-1 | 5 | 1.773 | 0.5 |
| Comp.Ex. 1 | - | 0 | b-1 | 100 | 0 | 0 | - | 0 | 1.716 | 6.7 |
| Comp.Ex. 2 | - | 0 | b-1 | 80 | 20 | 0 | - | 0 | 1.751 | 3.4 |
| Comp.Ex. 3 | - | 0 | b-1 | 80 | 0 | 20 | - | 0 | 1.735 | 2.2 |
| Comp.Ex. 4 | - | 0 | b-1 | 80 | 0 | 0 | d-1 | 20 | 1.705 | 0.1 |
| Comp.Ex. 5 | - | 0 | b-1 | 62 | 21 | 15 | d-1 | 2 | 1.775 | 2.5 |

As is clear from the results shown in Table 2, it is found that the cured products (optical materials) formed by curing the compositions of Example 1 to 21 were excellent in terms of high refractive index and oxidation resistance.

On the other hand, since the compositions of Comparative Examples 1 to 3 did not comprise the aromatic polythiol (a), oxidation resistance was insufficient.

In Comparative Example 4, aliphatic polythiol was used. It is found that the refractive index of the composition of Comparative Example 4 was insufficient.

## Claims

1. A composition, comprising:
Compound (a) represented by the following formula (1): 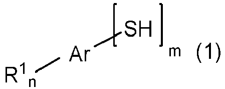
wherein
Ar represents an aromatic ring,
m represents an integer of 2 to 8,
n represents an integer of 0 to 6,
provided that m + n is a number of carbon atoms constituting the aromatic ring, or less, and
R¹ each independently represents an alkylthio group, a halogen group, a hydroxy group, a dialkylthiocarbamoyl group, or a dialkylcarbamoylthio group; and
Compound (b) represented by the following formula (2): 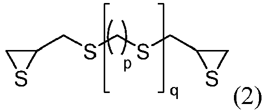
wherein
p represents an integer of 0 to 4, and
q represents an integer of 0 to 2.

2. The composition according to claim 1, wherein m is 2 or 3.

3. The composition according to claim 1 or 2, wherein m + n is 2 to 6.

4. The composition according to any one of claims 1 to 3, wherein a content of the Compound (a) is 1% to 30% by mass, with respect to a total mass of the composition.

5. The composition according to any one of claims 1 to 4, further comprising sulfur.

6. The composition according to any one of claims 1 to 5, further comprising 1,2,3,5,6-pentathiepane (c).

7. The composition according to any one of claims 1 to 6, further comprising polythiol (d).

8. The composition according to claim 7, wherein the polythiol (d) comprises at least one selected from the group consisting of 1,2,6,7-tetramercapto-4-thiaheptane, methanedithiol, (sulfanylmethyldisulfanyl)methanethiol, bis(2-mercaptoethyl)sulfide, 2,5-bis(mercaptomethyl)-1,4-dithiane, 1,2-bis(2-mercaptoethylthio)-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio)propane, tetramercaptopentaerythritol, 1,3-bis(mercaptomethyl)benzene, 1,4-bis(mercaptomethyl)benzene, and thiiranemethanethiol.

9. The composition according to any one of claims 1 to 8, further comprising a preliminary polymerization catalyst.

10. The composition according to claim 9, wherein the preliminary polymerization catalyst comprises at least one selected from the group consisting of 2-mercapto-1-methylimidazole, 2-methyl-N-imidazole, and 1,2,2,6,6-pentamethylpiperidyl methacrylate.

11. A precured product prepared by subjecting the composition according to any one of claims 1 to 10 to preliminary polymerization.

12. An optical material prepared by curing the composition according to any one of claims 1 to 10 or the precured product according to claim 11.

13. An optical lens, comprising the optical material according to claim 12.
